(19) Europäisches Patentamt / European Patent Office / Office européen des brevets

(11) **EP 2 199 824 B1**

(12) **FASCICULE DE BREVET EUROPEEN**

(45) Date de publication et mention
de la délivrance du brevet:
**26.12.2012 Bulletin 2012/52**

(51) Int Cl.:
***G01S 13/24*** *(2006.01)*     ***G01S 13/42*** *(2006.01)*
***G01S 7/36*** *(2006.01)*

(21) Numéro de dépôt: **09175493.7**

(22) Date de dépôt: **10.11.2009**

(54) **Procédé de gestion des fréquences et des pointages émis par un radar à antenne dispersive**

Verfahren zur Auswahl von Frequenzen und Strahlrichtungen für ein Radar mit frequenzgesteuerter Antenne.

Method of selecting frequencies and transmitted beam directions for a radar using a frequency dispersive antenna

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0807213**

(43) Date de publication de la demande:
**23.06.2010 Bulletin 2010/25**

(73) Titulaire: **Thales**
**92200 Neuilly Sur Seine (FR)**

(72) Inventeurs:
• **Barbaresco, Frédéric**
**91230 Montgeron (FR)**

• **Deltour, Jean-Claude**
**94260 Fresnes (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 645 839     US-A- 4 868 574**
**US-A- 5 066 956     US-A- 5 101 209**
**US-A- 5 659 319**

**Description**

La présente invention concerne le domaine général des systèmes de gestion des radars multifonctions à balayage électronique. Elle se rapporte aux procédés de gestion des ressources en temps radar, c'est-à-dire les procédés permettant de gérer de manière optimale l'enchainement des pointages effectués. Par pointage on entend l'exploitation, pour la mise en oeuvre d'une même fonction, des signaux obtenus par émission d'une forme d'onde donnée dans une direction de l'espace donnée par le diagramme de l'antenne. L'invention s'applique en particulier à la gestion des pointages par un radar de veille à antenne à fente dispersive.

Le phénomène d'ouverture dispersive, est un phénomène qui affecte certains radars (radars à antenne à fente). Il se traduit notamment de manière connue par un dépointage déterministe du faisceau d'antenne en fonction de la fréquence. Ces radars sont généralement des radars de veille, mono fonction, dont le coût de réalisation est relativement bas.

Pour de tels radars, ce phénomène, qui affecte la direction de pointage du faisceau, est très généralement considéré comme un inconvénient qui nécessite d'être corrigé en temps réel. Pour ce faire, par exemple, la déviation en azimut occasionnée est classiquement prise en compte dans la gestion des pointages de façon à ce que, compte tenu de cette déviation, on émette la forme d'onde voulue dans la direction souhaitée.

Dans le cas d'un radar de veille classique et en particulier dans le cas d'un radar de veille à antenne dispersive, la simplicité du fonctionnement mis en oeuvre passe par une définition figée et déterministe de l'enchaînement des pointages et des fréquences au cours du balayage de l'espace par l'antenne. Cet enchainement est préétabli à l'avance pour différents plans de fréquences (fréquences autorisées et/ou non brouillées). Il est généralement mémorisé dans une table qui est lue de manière périodique avec une périodicité constante qui correspond à la vitesse de rotation théorique de l'antenne. De la sorte, pour une direction pointée donnée, l'antenne étant considérée comme ayant une vitesse de rotation déterminée et constante, la forme d'onde jouée est connue de façon déterministe d'un tour à l'autre.

Dans ce type de radar, la bonne gestion des pointages est donc généralement dépendante de la précision et de la stabilité de la vitesse de rotation de l'antenne. Ainsi si la vitesse réelle de rotation de l'antenne n'est pas égale à la vitesse théorique, la position de l'antenne à un instant donné est différente de celle requise. De plus l'existence d'une fluctuation de la vitesse de rotation sur le tour d'antenne se traduit par une fluctuation non maîtrisée de la valeur de l'écart en azimut entre faisceaux adjacents, fluctuation qui ne peut être régulée par les moyens chargés de la gestion des ressources de temps radar.

Concernant les radars de veille à antennes dispersives, il est cependant connu d'exploiter la variation de la direction de pointage du lobe d'antenne occasionnée par une variation de la fréquence d'émission, de façon à doter le radar considéré de capacités de dépointage permettant de réaliser des émissions et des écoutes radar dans des directions présentant un angle donné par rapport à l'axe de l'antenne. Le fascicule de brevet des Etats-Unis d'Amérique délivré à la société COM DEV Ltd, portant le numéro 4,868,574, décrit notamment un radar à antenne dispersive comportant des moyens d'émission et de réception lui permettant d'exploiter cette particularité pour réaliser un pointage du faisceau d'antenne dans des directions variables en fonction de la fréquence exploitée.

Cependant, lorsque l'on souhaite disposer d'un radar capable d'enchaîner des pointages, non plus de manière prédéterminée mais de manière dynamique, il est connu d'utiliser un radar multifonctions de type radar Si balayage électronique, à antenne tournante, équipé de moyens permettant une gestion des pointages réalisés dans le faisceau d'antenne pour chaque azimut et pour chaque tour d'antenne. Une telle gestion est notamment décrite dans la demande de brevet européen déposée par la demanderesse et publiée sous la référence EP 0645839. Elle est cependant particulièrement adaptée au fonctionnement de tels radars et n'est pas directement utilisable pour gérer le fonctionnement d'un radar de veille, à antenne dispersive, de conception plus simple et ne disposant pas, en particulier, de capacités de dépointage proprement dites du faisceau d'antenne.

Un but de l'invention est de tirer parti du phénomène de dispersivité pour étendre les capacités opérationnelles d'un radar de veille à antenne dispersive en le rendant capable de fonctionner dans une certaine mesure à la manière d'un radar multifonction tout en assurant la diversité des fréquences jouées (l'équiprobabilité et la non-prédictibilité des fréquences utilisées suivant les plans de fréquences autorisés), la régulation de la charge (relatif au budget temps radar courant et la variation de vitesse de l'antenne) et la robustesse du radar au brouillage (robustesse vis à vis de l'écoute instantanée des fréquences brouillées et des informations entretenues tour à tour sur les cartes de fréquences brouillées). Un autre but de l'invention, relatif à la gestion du budget de temps radar, est de maintenir le taux d'utilisation opérationnelle du radar, en régulant, et non plus en subissant, les variations de l'écartement instantané entre les pointages contigus lorsque la période d'antenne n'est pas à sa valeur nominale (rotation de l'antenne en moyenne plus lente ou plus rapide) et que la vitesse de rotation d'antenne fluctue assez fortement dans le tour.

A cet effet l'invention a pour objet un procédé pour gérer l'émission des pointages par un radar comportant une antenne dispersive dont la vitesse est susceptible de varier au cours du temps, la gestion étant effectuée en fonction de l'angle de rotation de l'antenne, le procédé étant appliqué à des pointages candidats, chaque pointage candidat étant associé dans une table à une ou plusieurs fréquences candidates, **caractérisé en ce qu**'il comporte les étapes suivantes:

- une étape de sélection des pointages requis dont la direction est visible à l'instant considéré ;
- une étape de sélection par les fréquences autorisées ;
- une étape de sélection des fréquences éligibles les moins brouillées ;
- une étape de sélection des fréquences éligibles les moins utilisées ;
- une étape de création de nouvelles requêtes de pointages ;

les étapes du procédé formant un cycle répété séquentiellement, la table qui associe les pointages candidats et les fréquences candidates étant actualisée à chaque cycle.

Dans un mode de mise en oeuvre préféré, le procédé selon l'invention comporte en outre une étape complémentaire finale pour traiter le cas des pointages qui ne sont plus visibles à l'issue de l'itération courante compte tenu de la direction de l'antenne.

Dans un mode de mise en oeuvre particulier, le procédé selon l'invention comporte en outre une première étape intermédiaire qui consiste, à écarter de la sélection les pointages candidats qui, s'ils étaient finalement sélectionnés lors de l'itération considérée, pourraient induire la perte d'un ou de plusieurs autres pointages candidats dont la durée de visibilité est faible. Cette première étape intermédiaire est placée après la première étape principale.

Dans un mode de mise en oeuvre particulier, pouvant être combiné avec le précédant, le procédé selon l'invention comporte en outre une deuxième étape intermédiaire pour effectuer la sélection des pointages déclarés comme étant les plus prioritaires. Cette seconde étape intermédiaire est placée après la deuxième étape principale.

Dans un mode de mise en oeuvre préféré du procédé selon l'invention, l'étape de création de nouvelles requêtes de pointages procède pour chaque pointage candidat à l'association d'une plage de fréquences comprises dans un intervalle borné par deux fréquences $f_{min}$ et $f_{max}$. La fréquence $f_{max}$ est la fréquence la plus élevée du domaine de fréquences effectivement allouées au radar. La fréquence $f_{min}$ est une fréquence choisie de manière aléatoire dans un domaine de fréquence s'étendant de la fréquence la plus basse du plan de fréquences autorisées, à une fréquence $f_{limite\_tirage}$ supérieure à $F_{min}$ et inférieure à $f_{max}$.

Dans ce mode de mise en oeuvre préféré, la fréquence $f_{min}$ peut être obtenue par un tirage aléatoire qui suit une loi de probabilité de densité décroissante lorsque la fréquence augmente.

Dans ce mode de mise en oeuvre préféré, la fréquence $f_{limite\_tirage}$ peut être déterminée de façon à définir avec $f_{max}$ un intervalle de fréquences contenant un nombre n de fréquences autorisées faible devant le nombre de fréquences autorisées.

Dans un mode de mise en oeuvre préféré du procédé selon l'invention, l'étape de création de nouvelles requêtes de pointages prends en compte, pour la détermination des nouveaux pointages candidats, une première fenêtre angulaire contiguë au domaine de visibilité pour la détermination des nouveaux pointages de veille et une seconde fenêtre angulaire contiguë à la première fenêtre pour la détermination des autres nouveaux pointages. Les fenêtres angulaires sont déterminées de façon à prendre en compte la période de rotation d'antenne et la durée moyenne des pointages.

Dans ce mode de mise en oeuvre préféré, la première fenêtre angulaire est déterminée de façon à correspondre à l'angle de rotation de l'antenne sur une durée équivalente à la durée maximale d'un demi-pointage, à laquelle on ajoute le retard maximum pouvant exister entre le moment ou un pointage a été sélectionné et le moment où il est effectivement émis. La taille de la seconde fenêtre angulaire est quant à elle définie comme étant proportionnelle à la valeur d'extension azimutale $DAz_{AdaptationCharge}$ qui correspond à un multiple de l'extension azimutale correspondant au domaine de visibilité partiel, $DAz_{AdaptationCharge}$ étant dans tous les cas inférieure au domaine de visibilité complet.

Dans un mode de mise en oeuvre préféré du procédé selon l'invention, l'étape de sélection des fréquences éligibles les moins brouillées prend en compte les informations relatives aux fréquences les moins brouillées pour la sélection des pointages de deux façons possibles, soit localement par écoute instantanée des fréquences brouillées soit globalement par l'utilisation des cartes de fréquences brouillées disponibles.

Avantageusement, le procédé selon l"invention permet d'ordonnancer sur une antenne dispersive des pointages large bande dites de "Reconnaissance de cibles non coopératives" par le séquencement optimisé d'une série de pointages successifs bande étroite. Chaque pointage bande étroite est joué successivement dans le temps en direction de la cible, en utilisant la rotation d'antenne pour jouer les unes après les autres les émissions en bandes étroites.

Avantageusement également, le procédé selon l'invention permet l'insertion de pointages adressés, des pointages de poursuites par exemple, dans le séquencement général des pointages, et ce de façon similaire à un radar multifonction à balayage électronique deux plans.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent :

- les figures 1 et 2, des illustrations du problème posé dans la gestion des pointages par la présence de fluctuations temporelles non maîtrisées de la vitesse de rotation d'antenne ;
- la figure 3, une illustration des paramètres décrivant le phénomène de dispersivité ;

- la figure 4, une illustration du principe d'exploitation du phénomène de dispersivité par le procédé selon l'invention;
- la figure 5, un organigramme de principe des différentes étapes du procédé de planification des pointages selon l'invention;
- la figure 6, des illustrations de différents exemples de répartition des plans de fréquences de fonctionnement d'un radar ainsi que des paramètres de gestion des fréquences associées à un pointage;
- la figure 7, une illustration de la manière dont la borne inférieure de la fenêtre des fréquences de fonctionnement dont l'utilisation est autorisée, attribuée à chaque pointage, est tirée aléatoirement;
- la figure 8, une illustration du principe de sélection des pointages à partir de leur domaine de visibilité géré et la position courante de l'antenne en azimut;
- la figure 9, une illustration de la méthode pour limiter le nombre des pointages susceptibles d'être non exécutés du fait de l'expiration des intervalles de temps durant lesquels ils sont exécutables;
- la figure 10, l'illustration de la façon dont la troisième étape du procédé selon l'invention prend en compte le caractère discret des fréquences de fonctionnement et effectue la sélection des fréquences discrètes candidates compatibles de la fréquence théorique correspondant à la direction du pointage considéré;
- la figure 11, les illustrations des différents principes de sélection d'une fréquence, pouvant être mis en oeuvre par la sixième étape du procédé selon l'invention, lorsque plusieurs fréquences sont encore candidates à ce stade;
- la figure 12, l'illustration du principe de réactualisation de la table des pointages candidats mis en oeuvre au cours de la septième étape du procédé selon l'invention.
- la figure 13, l'illustration du principe de la gestion des temps morts (instant pour lequel aucun pointage n'est jouable ou ne peut être joué) par l'insertion de pointages techniques de durée déterminée;
- la figure 14, une illustration des effets provoqués par une vitesse de rotation d'antenne différente de la valeur nominale attendue et par des fluctuations de cette vitesse de rotation.

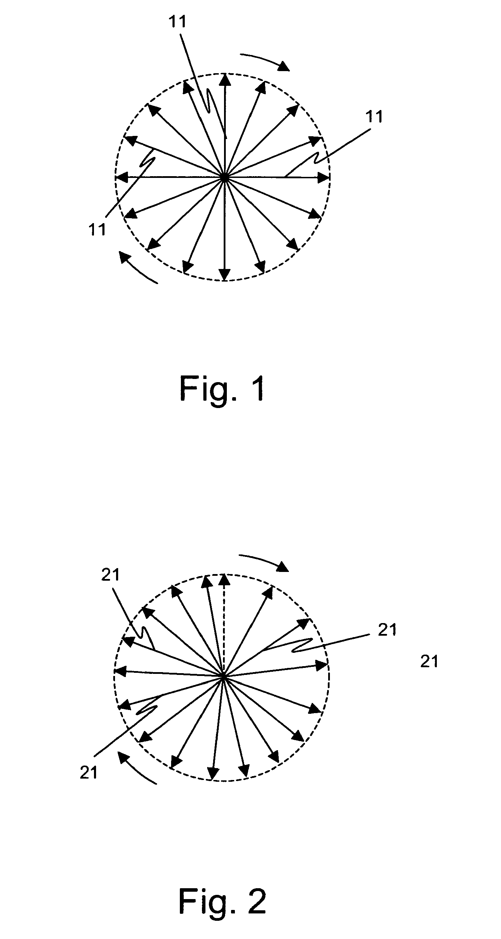

Les figures 1 et 2 illustrent de manière schématique l'effet des variations de la vitesse de rotation d'antenne sur la qualité de la couverture réalisée par un radar de veille dont le système de gestion des pointages ne prend pas en compte ces variations.

La figure 1, correspond au cas théorique où l'antenne du radar tourne à une vitesse $\omega_0$ constante précisément connue. Dans cette circonstance, il est possible de maitriser de façon déterministe l'instant t où le lobe de l'antenne est dirigé dans une direction $\theta$ donnée. Par suite, il est possible de mettre en oeuvre un mode de fonctionnement en veille dans lequel l'espace est régulièrement exploré, les directions pointées, matérialisées par les flèches 11 sur la figure 1, étant régulièrement espacées et précisément déterminées.

La figure 2, quant à elle, présente le cas d'une antenne, pour laquelle la vitesse de rotation n'est pas parfaitement régulée. Dans un tel cas dans certaines conditions atmosphériques (vents en rafales) la vitesse de rotation nominale $\omega_1$ de l'antenne n'est pas rigoureusement égale à la vitesse de rotation théorique $\omega_0$. En outre, la vitesse de rotation $\omega_1$ n'est pas constante au cours du temps de sorte que la vitesse de rotation de l'antenne réelle peut s'écrire :

$$\omega_1 = \omega_0 + \Delta\omega + \delta\omega(t) \qquad\qquad [1]$$

où $\Delta\omega$ représente un biais constant par rapport à la vitesse de rotation théorique $\omega_0$ et où $\delta\omega(t)$ représente un terme de fluctuation autour de la vitesse biaisée qui varie en fonction du temps c'est-à-dire en fonction de la direction vers laquelle le lobe d'antenne est orienté.

Par suite de cette variation non maitrisée de la vitesse de rotation, on peut assister à une répartition irrégulière des pointages réalisés, non maîtrisée par la gestion des faisceaux, matérialisés par les flèches 21 sur la figure 2, bien que les pointages soient, comme dans le cas de la figure 1, régulièrement commandés au cours du temps. La conséquence d'une telle variation de la vitesse de rotation de l'antenne est notamment que l'écart angulaire entre pointages n'est pas régulé. Ainsi, du fait d'un séquencement rigide initialement défini pour une vitesse de rotation constante, des fréquences non autorisées dans une direction donnée peuvent par exemple être utilisées. Cette répartition irrégulière des pointages réalisés peut occasionner des surcharges locales du séquencement des pointages radar à exécuter, surcharges que les radars classiques, du type à antenne dispersive, ne peuvent pas absorber.

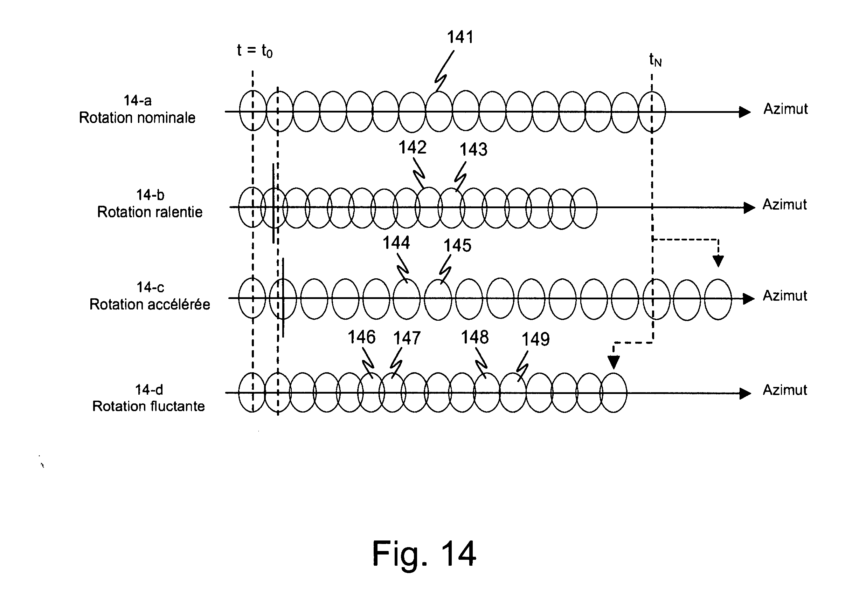

La variation de la vitesse de rotation d'antenne, qui se traduit par un biais sur cette vitesse et par une fluctuation autour de ce biais, a pour conséquence que, comme l'illustre la figure 14 les pointages 141 sont plus ou moins écartées angulairement.

L'illustration 14-a correspond à une vitesse nominale avec un écart entre pointages qui correspond juste à la valeur d'atténuation à 3 dB des faisceaux correspondants (les courbes figurant la largeur du faisceau à -3 dB sont alors tangentes au point de jonction).

L'illustration 14-b correspond quant à elle, à une vitesse plus faible pour laquelle les faisceaux de pointages consécutifs 142 et 143 sont systématiquement resserrés et se superposent dans les zones correspondant aux largeurs de lobes à 3 dB.

L'illustration 14-c correspond, quant à elle, à une vitesse plus élevée pour laquelle les faisceaux de pointages consécutifs 144 et 145 sont systématiquement disjoints.

Enfin, l'illustration 14-d correspond à une situation de fluctuation de la vitesse autour d'une vitesse nominale, situation pour laquelle l'écart entre les faisceaux de pointages consécutifs, 146 et 147 ou 148 et 149, évolue de pointage à pointage.

Par suite, si l'on souhaite maitriser ou du moins réguler les positions des directions réellement pointées de façon instantanée, en tenant compte des fréquences autorisées, il est nécessaire de mettre en place des moyens permettant de compenser du mieux possible ce phénomène de fluctuation de la vitesse de rotation de l'antenne. Le procédé selon l'invention constitue avantageusement un tel moyen.

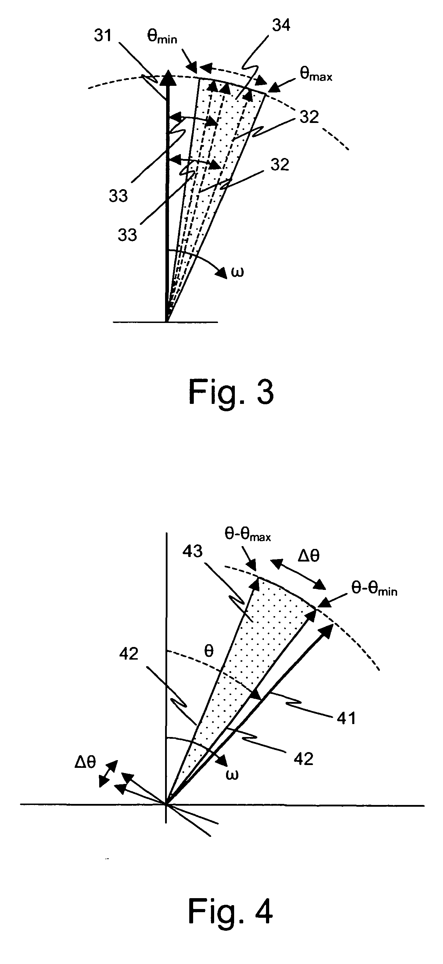

Comme il a été dit précédemment, le principe de fonctionnement du procédé selon l'invention repose sur l'utilisation du phénomène de dispersivité en azimut occasionné au diagramme d'émission (et de réception) d'une antenne, de type antenne à fentes par exemple, par la variation de fréquence du radar équipé d'une telle antenne. La figure 3 illustre ce phénomène qui se traduit par le fait que, en fonction de la fréquence d'émission, le diagramme de rayonnement d'une telle antenne, figuré par les flèches pointillées 32 sur la figure, présente un décalage angulaire 33 par rapport à la direction d'antenne 31, décalage dont la valeur est fonction de la fréquence d'émission. Par direction d'antenne, on entend ici, l'axe perpendiculaire au plan de l'antenne.

Ce décalage angulaire est compris dans un secteur 34 défini par la plage des fréquences de fonctionnement du radar. Le secteur 34 dépend de la bande de fréquences $\Delta f$ utilisée par le radar et dépend des fréquences minimum et maximum pouvant être utilisées dans la bande $\Delta f$. Dans l'exemple de la figure 3, le secteur 34 est présenté comme étant décalé en avance par rapport à l'axe de l'antenne 31.Cependant, le secteur 34 peut se trouver décalé vers en retard par rapport à l'axe de l'antenne 31. Il peut encore se trouver positionné de part et d'autre de l'axe de l'antenne 31 et dans ce cas, pour une antenne à fente, des contraintes physiques font que le secteur 34 est défini en deux sous-secteurs, droit et gauche, séparés par un secteur intermédiaire non autorisé.

Inversement, en prenant comme référence angulaire une direction pointée, on constate, comme l'illustre la figure 4, que pour une direction $\theta$ donnée 41 et une bande de fréquences d'émission $\Delta f$ donnée, on peut définir un secteur angulaire 43, de largeur $\Delta\theta = [\theta\text{-}\theta_{min} \ \theta\text{-}\theta_{max}]$, tel que, compte-tenu de la rotation $\omega$ de l'antenne il est toujours possible en jouant sur la fréquence d'émission de défléchir le faisceau de l'antenne dans la direction $\theta$ pendant que la direction d'antenne 42 balaye ce secteur. Par suite, on constate que pour une direction $\theta$ donnée 41, un pointage peut être exécuté dans cette direction, en profitant de la déflexion due à la présence de dispersivité, dès que et tant que la direction de l'antenne 42 sera présente pendant la rotation d'antenne dans l'intervalle angulaire $\Delta\theta = [\theta\text{-}\theta_{min} \ \theta\text{-}\theta_{max}]$.

Le procédé selon l'invention met en pratique ce principe pour rendre un radar monofonction capable de fonctionner, dans une certaine mesure comme un radar multifonctions. Les limitations de cette aptitude sont notamment liées aux déflexions maximum et minimum pouvant être réalisées en utilisant la dispersivité et aux fréquences de fonctionnement minimum et maximum pouvant être utilisées. Le procédé selon l'invention met également en pratique ce principe pour compenser au moins en partie les variations de la vitesse de rotation d'antenne.

Dans ce but, il a pour fonction principale de séquencer temporellement l'ordre dans lequel différentes formes d'ondes peuvent être mises en oeuvre, au cours de la rotation de l'antenne, chaque forme d'onde devant être appliquée pour une direction de pointage donnée et dans un laps de temps donné, sachant qu'un nombre conséquent de d'ordonnancement des pointages est possible du fait que le choix à un instant donné d'une fréquence de fonctionnement donnée permet d'exécuter un pointage plutôt qu'un autre. Pour ce faire l'ordonnancement est réalisé en tenant compte, entre autre chose, de la durée maximale durant laquelle le faisceau de l'antenne peut être pointé dans une direction donnée compte tenu de la vitesse de rotation instantanée de l'antenne et de la valeur du secteur angulaire $\Delta\theta$, sachant que d'autres pointages sont à réaliser dans ce même intervalle de temps.

De manière générale, la forme d'onde devant être mise en oeuvre dans une direction de l'espace couverte par le radar est déterminée par la fonction (fonction de veille ou autres fonctions adressées, comme par exemple une fonction de poursuite) que doit mettre en oeuvre le radar dans cette direction. On parle de manière connue de pointage, un pointage correspondant à l'emploi d'une forme d'onde donnée pour illuminer d'une façon propre à la fonction liée au pointage une direction donnée. Il est à noter que, en ce qui concerne la fonction de pointage adressé (par exemple un pointage de poursuite), celle-ci est généralement gérée par l'organe de gestion globale du radar et se traduit au niveau du procédé selon l'invention par la prise en compte de requêtes de pointages qui définissent les caractéristiques des pointages de poursuite à effectuer au cours de la rotation de l'antenne (direction, forme d'onde de durée adaptée associée et degré de priorité du pointage considéré). En revanche, en ce qui concerne la fonction de veille par contre, celle-ci est directement gérée par le procédé selon l'invention, dans la mesure où la forme d'onde mise en oeuvre est généralement déterminée et où les directions pointées sont déterminées par les durées des pointages, la vitesse de rotation instantanée estimée de l'antenne et par la charge radar considérée localement. Par charge radar on entend ici le nombre de pointage à exécuter dans un intervalle de temps donné.

Par suite, la fonction principale du procédé selon l'invention consiste à déterminer, à instant donné t, parmi l'ensemble des pointages requis celui devant être réalisé à un instant donné t', situé dans un proche avenir, compte tenu de la position prédite de l'antenne à cet instant t' à venir. L'instant t' à venir considéré est généralement celui qui correspond à la date de fin d'exécution du pointage en cours d'exécution à l'instant t considéré. Pour mener à bien cette tâche le procédé selon l'invention comporte différents modules de traitement qui coopèrent pour prendre en compte en temps réel les contraintes suivantes :

- La nécessité de tenir compte des fréquences d'émission autorisées et leur répartition dans la bande de fréquences allouée au fonctionnement du radar (cet ensemble de fréquences autorisées est constitué de fréquences discrètes qui peuvent être contiguës ou disjointes. Dans le cas de fréquences contiguës l'ensemble peut être défini par la totalité du plan des M fréquences disponibles ou par une sous-bande de N fréquences. Dans le cas de fréquences disjointes les fréquences autorisées sont définies par un peigne de P fréquences non-adjacentes, qui peut se limiter à une seule fréquence).
- la nécessité de tenir compte du fait que chaque fréquence autorisée doit être employée de façon équiprobable (en moyenne sur le tour et de tour à tour) et non prédictible (le choix d'une fréquence à un instant t ne peut être prédit par la connaissance d'un horizon fini des fréquences jouées) de façon à contrer du mieux possible certains types de brouillages.
- la nécessité de tenir compte du fait que la durée de la forme d'onde émise est variable d'un pointage à l'autre.
- la nécessité de tenir compte d'une hiérarchie dans l'importance des pointages demandés, matérialisée par un niveau de priorité accordé à chaque pointage.
- la nécessité de tenir compte de variations possibles de la vitesse de rotation de l'antenne qui conditionnent l'intervalle de temps durant lequel ce pointage peut être mis en oeuvre.
- la nécessité d'assurer qu'un nombre réduit de pointages ne sera pas exécuté;
- la nécessité de tenir compte des fréquences brouillées de façon instantanée (grâce à un temps d'écoute avant l'émission de chaque pointage) en faisant réaliser les dernières étapes de sélection du pointage par l'antenne (envoi de fréquences/pointages candidats et sélection de la fréquence selon la "Fréquence La Moins Brouillée"(FMB)).
- La nécessité de tenir compte des fréquences brouillées de tour à tour en fonction des informations de la carte des fréquences brouillées entretenue et mise à jour de tour à tour et par secteur.
- le souhait de minimiser les "temps morts" (temps de non-émission de pointages) par l'utilisation dans ces cas de pointages techniques dont le nombre dépend du budget temps radar courant.
  Dans la suite de ce document le principe des différentes fonctions mises en oeuvre pour prendre en compte ces différentes contraintes dans la planification des pointages est décrit de manière plus détaillée.

Le procédé selon l'invention, appelé "gestion des pointages radar" (GPR) trouve sa place dans la chaîne de commande des modes de fonctionnement radar et se positionne entre le module chargé de la "gestion des tâches radar" (GTR) et le module chargé de la "gestion des rafales d'impulsions radar" (GRR).

Le module de gestion des tâches radar (GTR) fournit au procédé selon l'invention sous forme de requêtes d'exécution de tâches, des informations relatives aux caractéristiques de certains pointages ou familles de pointages dont il requiert l'exécution, des pointages de poursuite principalement ainsi que certains pointages de veille particuliers (veille définie par secteur). Ces caractéristiques sont notamment la direction du pointage, la nature de la forme d'onde mise en oeuvre, la période de renouvellement des pointages (pour les pointages périodiques comme "la poursuite") ainsi que le degré de priorité associé à l'exécution du pointage considéré.

Le procédé selon l'invention GPR prend en compte ces requêtes et les incorpore en temps utile dans une table qu'il entretient périodiquement au fil du temps. Cette table, ou table des pointages candidats, contient l'ensemble des informations relatives aux pointages pouvant être mis en oeuvre durant un intervalle de temps donné, pointages appelés ici "pointages candidats". Le procédé GPR gère l'ordonnancement des pointages inscrits dans la table en tenant compte de la position de l'axe de l'antenne, de la vitesse instantanée de rotation d'antenne et des fréquences utilisables (i. e. les fréquences autorisées et non brouillées) par chaque pointage puis délivre au module chargé de la gestion des rafales d'impulsions radar (GRR) la liste correspondante des rafales à émettre.

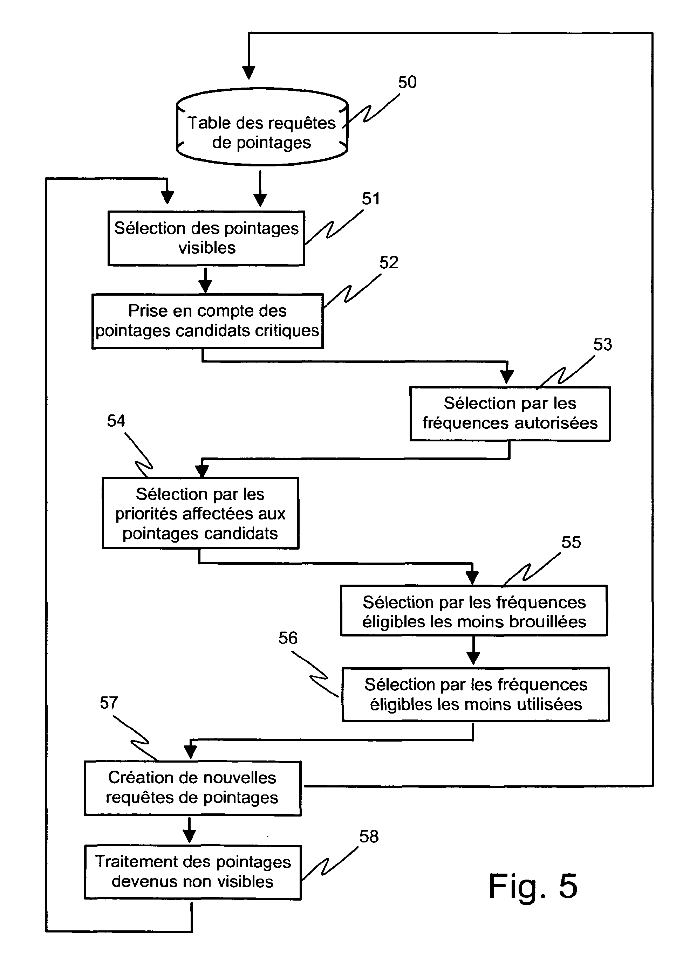

Comme l'illustre la figure 5, le procédé selon l'invention (GPR) est un procédé itératif constitué de huit étapes successives 51 à 58. les deux étapes 52 et 54 ont un caractère optionnel tandis que les étapes 51, 53, 55 à 58 constituent les étapes essentielles du procédé. L'étape 58 est quant à elle une étape finale qui peut être associée au procédé et qui a pour objet de traiter le cas des pointages qui n'ayant finalement pas été sélectionnés ne seront plus visibles à l'itération suivante, compte tenu de la direction nominale de l'antenne.

Le procédé selon l'invention élabore et entretient la table 50 des pointages candidats, chaque pointage candidat étant initialement associé, à chaque itération, à une ou plusieurs fréquences d'émission (une fréquence d'émission pouvant être associée à plusieurs pointages candidats à cette étape), puis analyse de manière régulière les pointages contenus dans la table de façon à déterminer l'ordre dans lequel ces pointages candidats doivent être mis en oeuvre. Autrement dit, il a pour objet de sélectionner à chaque itération un des pointages candidats contenus dans la table 50 et une des fréquences candidates initialement associées à ce pointage. Ce couple (pointage, fréquence) est le premier en date à être mis en oeuvre par le radar.

Il est à noter qu'il n'y a pas bijection, dans la table, entre un pointage et une fréquence. Un pointage candidat peut avoir plusieurs fréquences associées et inversement une fréquence candidate peut être associée à plusieurs pointages candidats.

Selon l'invention l'ensemble des fréquences d'émission associées à chaque pointage est déterminé à partir d'un tirage aléatoire réalisé dans le plan des fréquences globalement attribué au radar pour son fonctionnement. Dans la forme préférée de mise en oeuvre de l'invention ce tirage aléatoire est un tirage particulier, qui a principalement pour objet d'assurer la diversité des fréquences qui seront en final jouées par le radar, tous pointages confondus. De la sorte, chaque pointage candidat est associé, pour une itération donnée, à un ensemble de fréquences qui lui est propre, deux pointages pouvant cependant, par le fruit du hasard, être associés à un même ensemble de fréquences qui représente un sous-ensemble du plan de fréquences attribué au radar. Ce sous-ensemble est ainsi défini par une fréquence $f_{min}$ et une fréquence $f_{max}$.

Pour réaliser la sélection d'un couple (pointage, fréquence), chacune des étapes 51 à 56 applique un traitement spécifique aux pointages candidats mémorisés dans la table et aux fréquences associées, le traitement appliqué à chaque étape permettant d'écarter de la sélection finale (fin d'itération) soit un ou plusieurs pointages (étapes 51, 52, 54 du procédé) soit une ou plusieurs fréquences du plan de fréquences alloué au radar (étapes 53, 55 et 56).

Le traitement mis en oeuvre à une étape donnée est appliqué soit aux pointages candidats retenus, soit aux fréquences candidates retenues à l'issue des étapes précédentes.

Les pointages et les fréquences non écartés à l'issue d'une étape donnée sont soumis à la sélection de l'étape suivante, tandis que les pointages écartés sont mis de côté pour le reste de l'itération de façon à être éventuellement analysés de nouveau au cours de l'itération suivante.

Par suite le couple (pointage, fréquence) finalement retenu à l'issue de la dernière étape du procédé est transmis au module à la gestion des rafales d'impulsions radar (GRR).

Dans la suite du document on décrit l'ensemble des huit étapes que peut comporter le procédé selon l'invention en gardant à l'esprit que Les étapes 52 et 54 étant optionnelles le procédé selon l'invention peut ne comporter dans une version simplifiée que six étapes.

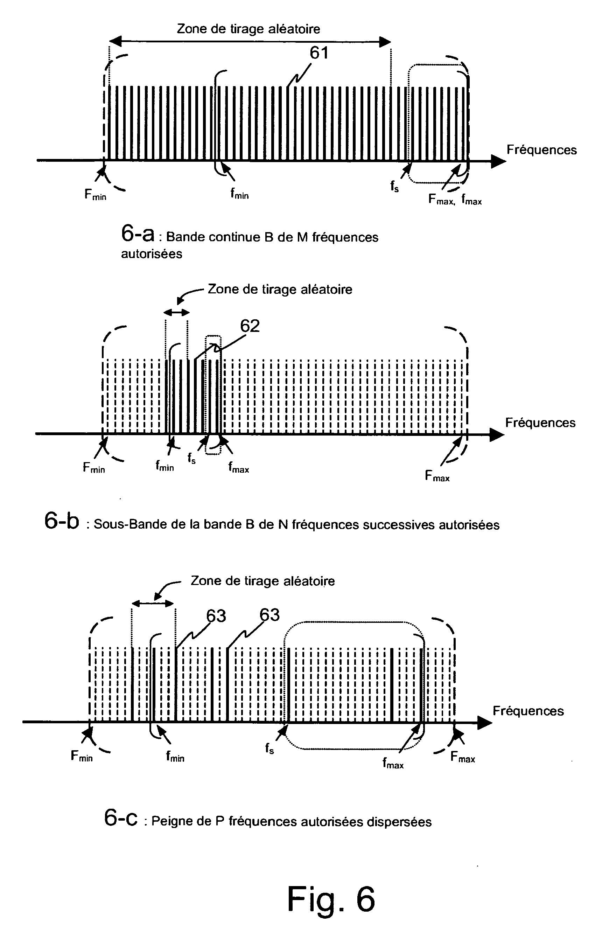

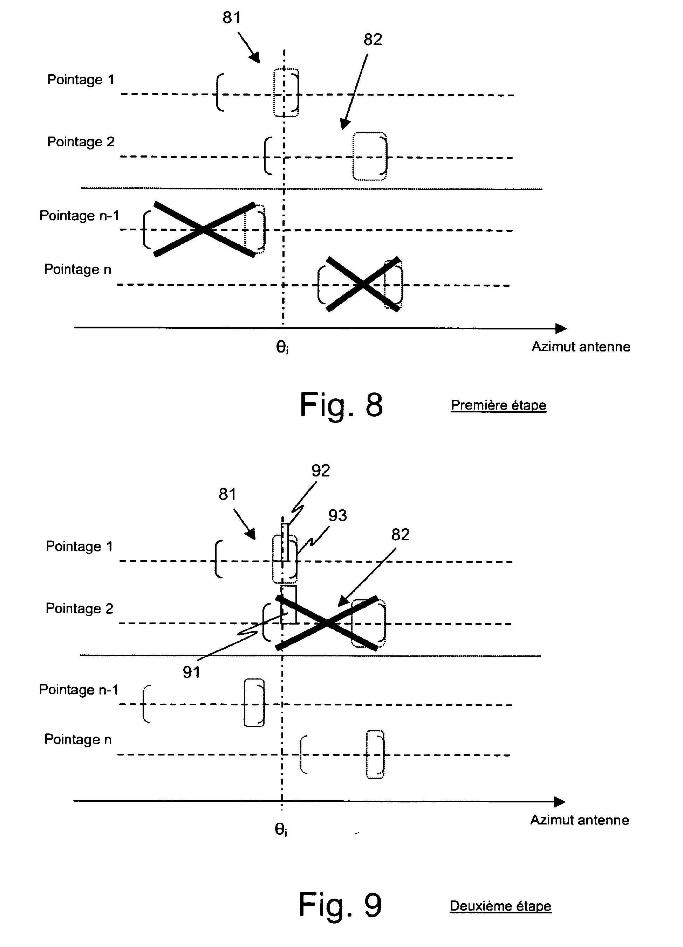

La première étape 51, consiste, comme l'illustrent les figures 6 et 8, à déterminer parmi les pointages candidats contenus dans la table, les pointages 81, 82 dont le domaine de visibilité géré, qui représente une fraction du domaine de visibilité alloué, ne contient pas la direction de l'antenne à l'instant considéré. Ces pointages sont par principe écartés de la suite de la sélection.

Selon l'invention, la table des pointages candidats comporte en effet pour chaque pointage à la fois les caractéristiques de forme d'onde associées au pointage, le niveau de priorité du pointage considéré vis à vis des autres pointages de la table, la direction requise $\theta_0$ du pointage, la durée du pointage et la fraction du domaine de visibilité allouée au pointage. Selon l'invention, on définit le domaine de visibilité alloué associé à un pointage comme l'ouverture azimutale accessible par déflexion du faisceau radar à l'instant considéré, compte tenu des fréquences de fonctionnement disponibles (utilisables) pour réaliser un pointage dans la direction considérée. De manière analogue on définit également le domaine de visibilité géré associé à un pointage comme l'ouverture azimutale accessible par déflexion du faisceau radar à l'instant considéré, compte tenu des fréquences de fonctionnement (fréquences candidates) associées par tirage au pointage considéré dans la table des pointages candidats, ces fréquences étant sélectionnées dans le domaine des fréquences utilisables. Autrement dit, le domaine de visibilité géré constitue une fraction du domaine de visibilité allouée. Il est déterminé à partir de la plage de fréquences allouée au pointage considéré. Cette plage de fréquences représente elle-même un sous-ensemble du plan de fréquences autorisées allouées au radar.

Le plan de fréquences autorisées peut prendre plusieurs formes, comme l'illustrent les illustrations 6-a à 6-c de la figure 6. Il peut par exemple consister en un jeu de M fréquences 61 consécutives couvrant la totalité du plan de fréquences B alloué au fonctionnement du radar (6-a) ou une sous-bande de N fréquences 62 contiguës (6-b) de la bande de fréquences totale B. Il peut également consister (6-c) en un jeu de P fréquences 63 réparties de façon disjointe ou pas sur l'ensemble de la bande B (appelé peigne lacunaire de fréquences). On notera ici que la bande de fréquences B allouée au radar est très généralement un ensemble de fréquences discrètes écartées régulièrement comprises entre une fréquence $F_{min}$ et une fréquence $F_{max}$.

Selon l'invention, la plage de fréquences attribuée à chaque requête de pointage, fréquences qui forment le domaine de visibilité géré, est déterminée, comme l'illustre le schéma de la figure 6, par une fréquence minimale $f_{min}$ choisie à l'aide d'un processus aléatoire parmi les fréquences constituant le plan de fréquences autorisées B qui sont inférieures à une fréquence $f_{limite\_tirage}$ donnée, et une fréquence maximale $f_{max}$ supérieure à $f_{limite\_tirage}$ et inférieure ou égale à la fréquence maximale $F_{max}$ de ce plan de fréquences. L'ensemble des n fréquences appartenant à l'intervalle $[f_s\ f_{max}]$ forme une zone du domaine de visibilité géré appelée fenêtre de sécurité. Selon l'invention n est défini comme un nombre petit devant le nombre des fréquences autorisées. Le principe de détermination de $f_{min}$ est exposé dans la suite de la description relative à l'étape 57.

Par suite, l'étape 51 sélectionne les pointages considérés comme visibles au regard des critères cités précédemment, les autres pointages candidats étant alors écartés.

Il est en outre à noter que, si certaines fréquences candidates ne sont associées qu'à des pointages candidats qui sont écartés, ces fréquences se trouvent, par voie de conséquence immédiate, écartées des choix réalisés ultérieurement durant l'itération considérée. Ainsi, la sélection opérée à l'étape 51, étape qui ne concerne en principe en compte que les pointages candidats peut influencer, en pratique, la sélection des fréquences.

Selon l'invention, la deuxième étape 52 est appliquée aux pointages candidats qui n'ont pas été rejetés à l'issue de la première étape 51. Elle consiste, comme l'illustre la figure 9, à écarter les pointages 82 qui, s'ils étaient finalement sélectionnés lors de l'itération considérée, pourraient induire la perte d'un ou de plusieurs autres pointages candidats 81 dont l'échéance est proche, c'est-à-dire des pointages 81 qui, s'ils étaient écartés, ne pourraient plus être sélectionnés à l'itération suivante, compte tenu du temps nécessaire pour émettre le pointage 82 retenu à l'itération considérée. C'est en particulier le cas si, comme l'illustre la figure 9, la direction de l'antenne se trouve à l'instant de la sélection proche de la sortie 93 du domaine de visibilité géré du (ou des) pointage(s) écarté(s). Le principe de cette seconde étape consiste donc à prendre en compte les durées d'exécution 91 et 92 des pointages en cause 81 et 82 pour déterminer si la sélection d'un pointage candidat 82 opérée à l'itération courante peut éliminer un autre pointage candidat 81 à l'itération suivante, ce pointage, dont l'échéance est proche, pouvant être ou ne pas être encore un pointage candidat au moment de la sélection.

Par suite à l'issue de la deuxième étape 52 les pointages candidats sélectionnés sont soit les pointages déjà sélectionnés au cours de l'étape 51, soit les pointages jugés prioritaires conformément à leurs dates d'échéance.

Pour traiter le cas où plusieurs pointages proches de leur échéance risquent d'être perdus, le procédé commence itérativement les tests par le plus prioritaire de ceux-ci. En cas ou le pointage restant à cette étape est non jouable relativement à sa fréquence, les pointages précédemment désélectionnés sont réactivés.

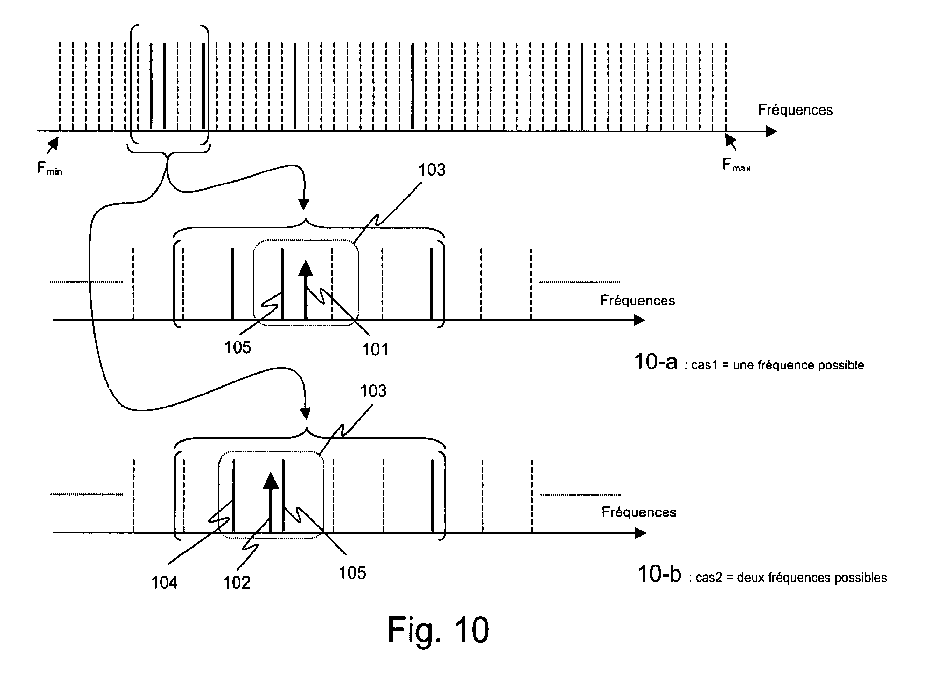

La troisième étape 53 du procédé selon l'invention a pour objet de sélectionner parmi les pointages retenus à l'issue de l'étape précédente, étape 51 ou 52 selon les cas, uniquement les pointages dont une au moins des fréquences associées correspond à la déflection azimutale à opérer (par rapport à la direction de l'antenne) pour exécuter ce pointage dans la direction requise, ces fréquences étant les fréquences autorisées correspondant au domaine de visibilité géré propre à chaque pointage. Le principe de cette sélection est illustré par les illustrations 10-a et 10-b de la figure 10 qui illustrent deux cas possibles, le premier cas 10-a correspondant à un pointage associé à deux fréquences.

Pour ce faire, on détermine pour chaque pointage la ou les fréquences qui lui sont allouées qui correspondent à l'instant de sélection à la direction requise 101 ou 102 (fréquence théorique) 101 du pointage compte-tenu d'une tolérance matérialisée par la fenêtre 103 sur les illustrations 10-a et 10-b de la figure 10. L'illustration 10-a présente le cas où pour un pointage donné on ne peut retenir qu'une des fréquences associées 105. L'illustration 10-b présente quant à elle le cas où pour un pointage donné on peut retenir deux des fréquences associées 104 et 105.

La tolérance matérialisée par la fenêtre 103 permet de limiter l'écart entre la direction requise 101 ou 102 et la direction réellement pointée 104 ou 105 du fait que les fréquences disponibles sont distribuées de manière discrète. La fenêtre de tolérance est définie en fonction des contraintes de performances du radar.

Par suite, si parmi les fréquences candidates associées au pointage candidat considéré, il existe au moins une fréquence au voisinage de la fréquence $f_0$ correspondant à la direction théorique $\theta_0$ du pointage, c'est-à-dire une fréquence allouée se situant dans la fenêtre de tolérance alors le pointage est retenu ainsi que la ou les fréquences voisines de $f_0$ qui lui ont permis d'être retenu

Ainsi, dans l'hypothèse où aucune des fréquences allouées au pointage candidat ne se situe dans cette fenêtre, celui-ci est écarté.

De même, dans l'hypothèse, correspondant à l'illustration 10-a, où une seule fréquence 103 parmi les fréquences allouées se situe dans cette fenêtre, le pointage et cette fréquence sont retenus.

Enfin, dans l'hypothèse, correspondant à l'illustration 10-b, où plusieurs des fréquences 104 et 105 allouées se situent dans cette fenêtre, le pointage ainsi que ces deux fréquences sont retenus.

On rappelle ici que, comme l'illustre la figure 10 et comme cela a été dit précédemment, il n'existe pas de relation bijective entre un pointage candidat et une fréquence candidate (une fréquence candidate 105 peut être associée à plusieurs pointages candidats, et inversement un pointage candidat peut posséder plusieurs fréquences 104, 105 candidates).

Selon l'invention quatrième étape 54 du procédé est appliquée aux pointages candidats qui n'ont pas été rejetés à l'issue de la troisième étape 53. Elle consiste à prendre en compte le niveau de priorité attribué à chacun des pointages candidats. Ce niveau de priorité est notamment fonction de la nature du pointage considéré (par exemple des priorités différentes peuvent être attribuées suivant l'importance du type de pointage, comme entre des pointages de veille et de poursuite) et de la position courante de la direction de l'antenne dans son domaine de visibilité géré (un pointage dont la direction d'antenne entre dans sa fenêtre sauvegarde voit sa priorité augmenter). A l'issue de cette étape, si un pointage est d'un niveau de priorité supérieur aux niveaux de priorité des autres pointages retenus à l'issue de la troisième étape 53, ce pointage est conservé. De même, si plusieurs pointages ont un niveau de priorité identique, supérieur au niveau de priorité des autres pointages candidats retenus à l'issue de la troisième étape 53, ces pointages sont conservés.

La cinquième étape 55 du procédé selon l'invention, a pour objet de d'écarter de la sélection finale ceux des pointages candidats retenus à l'étape précédente, étape 53 ou 54 selon les cas, pour lesquels toutes les fréquences associées sont déclarées brouillées ou, dans le cas ou les fréquences associées aux pointages candidats sont toutes brouillées, d'écarter tous les pointages candidats hormis celui ou ceux associés à la fréquence la moins brouillée.

La détermination des fréquences brouillées peut être réalisée de différentes manières connues. Il est par exemple possible d'utiliser une carte des fréquences brouillées, établie par ailleurs par le radar lors de phases d'écoute par exemple. Cette carte est généralement établie pour l'ensemble du plan de fréquences autorisées du radar. Cette carte est entretenue de tour à tour par secteur en fonction des résultats des fréquences écoutées. Alternativement il est également possible de déterminer de manière dynamique ces fréquences brouillées, en limitant l'analyse du brouillage aux seules fréquences candidates, c'est-à-dire aux fréquences autorisées réellement accessibles par le radar à l'instant courant, c'est à dire celles qui ont été sélectionnées par l'étape de sélection précédente 54. L'analyse est alors réalisée par le radar en temps réel en procédant, avant l'émission d'un pointage, à une écoute ciblée sur un jeu restreint de ces quelques fréquences. Cette dernière façon de procéder est connue sous la dénomination anglo-saxonne "Instantaneous Least Jammed Frequencies" (ILJF).

Par suite la cinquième étape 55 du procédé selon l'invention distingue trois cas :

- Si aucune des fréquences candidates associées aux pointages candidats retenus n'est brouillée aucun des pointages candidats n'est écarté.
- si toutes les fréquences candidates sont brouillées, le pointage conservé est celui associé à la fréquence la moins brouillée.
- si seulement certaines fréquences candidates sont brouillées, seuls les pointages candidats qui ne sont associés qu'à des fréquences brouillées sont écartés.

Il est à noter que pour des contraintes de fonctionnement en temps réel, l'étape 55 et les suivantes peuvent être opérationnellement insérées dans la GRR, car le procédé d'écoute instantané ILJF est très contraint en temps. Selon l'invention la sixième étape 56 du procédé est appliquée aux pointages candidats qui n'ont pas été rejetés à l'issue de la cinquième étape 55. Elle constitue la dernière étape de sélection et consiste à ne retenir que le pointage candidat associé à la fréquence candidate la moins utilisée au cours des itérations précédentes. Ce pointage et la fréquence correspondante forment le couple (pointage, fréquence) finalement sélectionné.

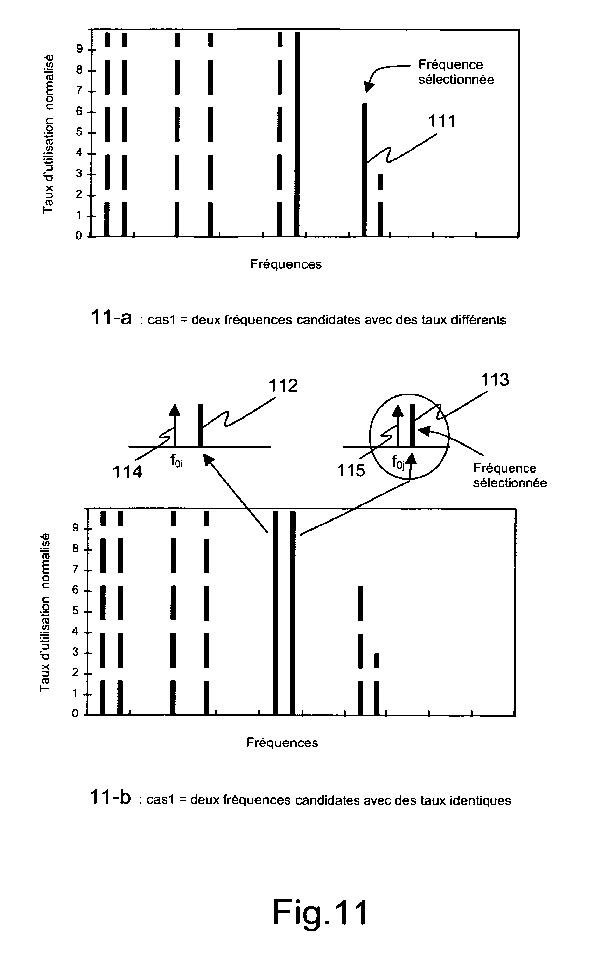

Le test pratiqué au cours de cette sixième étape, illustrée par la figure 11, est basé sur l'étude de l'histogramme des fréquences autorisées émises lors des derniers tours d'antenne (pour chaque fréquence autorisée pourcentage de pointages émis à cette fréquence). Dans l'illustration de la figure 11 on considère le cas où seuls deux pointages candidats associés chacun à une seule fréquence sont encore retenus (représentés par des segments de droites en traits pleins). Selon l'invention, si une fréquence 111, correspondant aux pointages candidats retenus à l'issue de l'étape précédente, présente un taux d'utilisation plus faible que l'autre fréquence retenue (illustration 11-a, en traits continus les fréquences candidates), cette fréquence est choisie. Par suite le ou les pointages correspondants sont retenus et les autres pointages candidats sont écartés. En revanche si toutes les fréquences correspondant aux pointages retenus présentent un taux d'utilisation identique comme le montre la figure 11-b où deux fréquences 112 et 113 se trouvent avoir un taux d'utilisation égal, alors la fréquence choisie (113) est celle qui est la plus proche de la fréquence nominale $f_0$ (114 pour la fréquence 112, 115 pour la fréquence 113) du pointage candidat auquel elle est associée. Par suite le pointage candidat auquel est associée cette fréquence est retenu et les autres pointages sont écartés.

En dernier lieu si plusieurs pointages sont associés à la fréquence retenue, celui qui sera retenu est celui pour lequel la direction d'antenne est la plus proche de la sortie de son domaine de visibilité géré, ou ce qui est équivalent, le pointage dont l'échéance temporelle est la plus proche.

A l'issue de la sixième étape 56 du procédé selon l'invention, un seul pointage candidat est finalement retenu. Les formes d'ondes caractéristiques de ce pointage sont transmises à la gestion des rafales d'impulsions radar (GRR) qui produira ensuite le séquencement temporel de la phase d'émission et de la phase de réception radar correspondant à ce pointage. Le pointage candidat est ensuite soit supprimé de la table des pointages candidats (cas des pointages de veille), soit maintenue en mémoire dans cette table mais sous une forme désactivée (cas des pointages de poursuite, qui sont réactivés en fonction de leur période d'émission).

La sixième étape du procédé selon l'invention est suivie par une septième étape 57 qui a pour objet d'alimenter la table des pointages candidats à partir de nouvelles requêtes de pointage ou de réactiver des requêtes de pointage de poursuite qui vont bientôt de nouveau être visibles par l'antenne.

Cette étape réalise en particulier le choix de la plage des fréquences qui sont associées à chaque pointage, fréquences qui, comme cela a été dit précédemment, sont choisies en mettant en oeuvre un tirage aléatoire particulier. Ce tirage aléatoire des fréquences, a principalement pour objet d'assurer la diversité des fréquences qui seront en final jouées par le radar, tous pointages confondus. Il consiste à déterminer les fréquences $f_{min}$ et $f_{max}$ de début et de fin de plage. La fréquence $f_{min}$ de début de plage est choisie de manière aléatoire parmi les fréquences de la plage suffisamment éloignées de la fenêtre de sécurité afin d'assurer la réalisation de la contrainte de diversité de fréquences. Cependant, la détermination de la fréquence $f_{min}$, qui caractérise le début de la plage de fréquences allouée au pointage, ne résulte pas d'un simple tirage aléatoire équiprobable pour lequel la probabilité de choisir, pour $f_{min}$, une fréquence donnée du plan de fréquence cité précédemment est la même pour toutes les fréquences de la zone de tirage de la première fréquence. Elle résulte en réalité d'un tirage pour lequel la probabilité de choisir, pour $f_{min}$, une fréquence donnée est une fonction décroissante de la position relative de cette fréquence dans la zone de tirage de la première fréquence, les fréquences les plus basses ayant plus de chance d'être choisies que les plus hautes.

Selon l'invention, la loi de décroissance est établie de telle sorte que la fréquence minimum ($f_{min}$) est tirée en mettant de côté les fréquences les plus élevées du domaine de fréquences, fréquence inférieures à la fréquence maximale $F_{max}$.

On définit ainsi une fréquence minimale limite $f_{limite\_tirage}$ inférieure à la fréquence $F_{max}$ de sorte que la zone de tirage de la fréquence $f_{min}$ est comprise dans l'intervalle $[F_{min}, f_{limite\_tirage}]$. La zone de tirage aléatoire $[F_{min}, f_{limite\_tirage}]$ est telle que la probabilité de tirer une fréquence au delà de $f_{limite\_tirage}$ est nulle. La loi des probabilités de tirage dans l'intervalle $[F_{min}, f_{limite\_tirage}]$ de la fréquence minimum $f_{min}$ est en outre décroissante, ce qui a avantageusement pour effet de compenser le fait que l'intersection de tous les ensembles, qui seront en final attribués aux pointages, favoriseront l'occurrence de sélection des fréquences élevées dans ces ensembles.

Le caractère décroissant de la loi de tirage de $f_{min}$ qui favorise les fréquences faibles vient avantageusement compenser l'effet induit de favorisation systématique des fréquences élevées naturellement provoqué par le mode de sélection des fréquences mis en oeuvre au cours des étapes du procédé selon l'invention. Il permet ainsi d'établir une équiprobabilité des fréquences jouées par le radar.

Selon l'invention, la formule du tirage de la fréquence minimum $f_{min}$ est donnée par l'expression :

$$i_{freq} = Nb_{freq\_aleatoire} - 1 - E\left(Nb_{freq\_aleatoire} \cdot Tirage\_uniforme(.)^{Coeff\_tirage}\right) \quad [2]$$

dans laquelle:

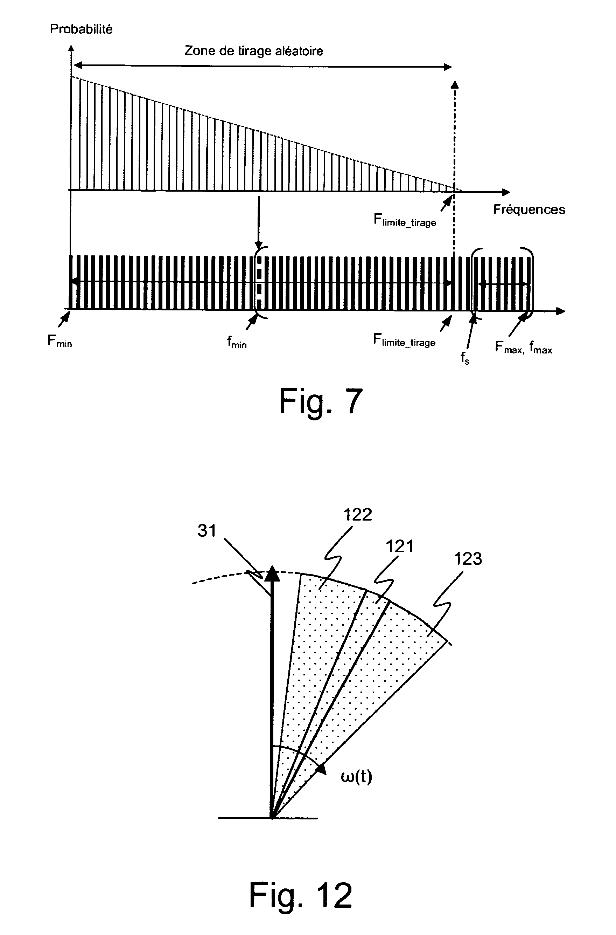

- $Nb_{freq\_aleatoire}$ est le nombre de fréquences de la plage du tirage aléatoire;
- $E()$ est la fonction qui renvoie la partie entière d'un nombre;
- $Tirage\_uniforme(.)$ est la fonction qui renvoie un nombre entre 0 et 1 suivant une loi uniforme;
- $Coeff\_tirage$ est un coefficient réel entre 0 et 1, utilisé en exposant de la fonction $Tirage\_uniforme(.)$. On pourra prendre, par exemple, une valeur égale à 0.5 et obtenir ainsi un tirage selon une loi qui suit une décroissance uniforme (loi linéaire) comme dans le cas illustré par la figure 7. Alternativement, on pourra prendre, par exemple, une valeur égale à 0.25 et obtenir ainsi un tirage selon une loi qui suit une décroissance quadratique.
- $i_{freq}$ est l'indice de la fréquence sélectionnée, les fréquences de la plage du tirage aléatoire étant indicées de 0 pour la fréquence la plus basse à ($Nb_{freq\_aleatoire}$ - 1) pour la fréquence la plus haute. La fréquence correspondant à l'indice $i_{freq}$ correspondra à la fréquence $f_{min}$ de la fenêtre attribuée au pointage.

Comme le montre des simulations effectuées par la déposante, ce tirage aléatoire particulier contrairement à un tirage aléatoire équiprobable contribue à obtenir avantageusement une distribution homogène au cours du temps des fréquences autorisées. Il contribue ainsi à ce que le radar soit moins sensible à certains types de brouillages.

Ainsi, l'étape 57 du procédé selon l'invention permet d'associer à chacun des pointages candidats, une plage de fréquences dont la fréquence de début, $f_{min}$, est déterminée de façon à induire une répartition plus homogène des fréquences qui seront mises en oeuvre. Ces fréquences constituent la zone nommée "zone de tirage de la première fréquence". Un nombre donné de fréquences est de cette manière attribué à chaque pointage candidat au moment de son intégration dans la table. La détermination de la plage de fréquences associée à chaque pointage candidat est avantageusement réalisée de manière complètement indépendante d'un pointage à l'autre. Chaque fréquence détermine, compte tenu de la position de l'antenne et de sa vitesse de rotation, un instant de réalisation possible du pointage considéré. Comme l'illustre la figure 7, la plage de fréquences ainsi déterminée permet donc de définir pour chaque requête de pointage une zone angulaire de taille variable (aléatoire) appelée domaine de visibilité géré qui lorsqu'elle est parcourue par la direction d'antenne autorise le radar à mettre en oeuvre le pointage correspondant en utilisant une des fréquences de la plage. De la sorte, comme l'illustre la figure 8, il est possible de déterminer, pour une direction donnée de l'antenne, les pointages candidats 81 et 82 susceptibles d'être mis en oeuvre à un instant donné, dès lors que l'azimut antenne se trouve dans un au moins des domaines de visibilité des pointages candidats.

Par la suite les requêtes de pointages qui ont étés choisies et celles dont la mise en oeuvre n'est plus possible (direction d'antenne située après les domaines de visibilités de ces requêtes) sont éliminées de la table tandis que les autres y restent (direction d'antenne située avant ou dans les domaines de visibilités de ces requêtes) de façon à être pris en compte à l'itération suivante.

Outre le choix de la plage des fréquences qui sont associées à chaque pointage candidat, l'étape 57 a également pour fonction de constituer dynamiquement à chaque itération, comme l'illustre la figure 12, les nouvelles requêtes de pointage à prendre en compte. Ces nouvelles requêtes sont à la fois de nouvelles requêtes de pointages de veille dont les directions sont incluses dans une première fenêtre angulaire 121 contiguë au domaine de visibilité 122 du radar (domaine de visibilité complet si toutes les fréquences sont autorisées ou domaine de visibilité partiel si seule une partie des fréquences est autorisée) ainsi que des requêtes de pointages d'autres types pouvant éventuellement survenir, des requêtes de poursuite par exemple, requêtes dont les directions sont incluses dans une seconde fenêtre angulaire 123 contiguë à la première fenêtre 121. La position de l'antenne 31 prise pour origine est celle obtenue après prise en compte du dernier pointage choisi.

Selon un mode de mise en oeuvre préféré de l'invention, la taille de la première fenêtre angulaire 121 est déterminée de façon à correspondre à l'angle de rotation de l'antenne sur une durée équivalente à la durée maximale d'un demi-pointage à laquelle on ajoute le retard maximum pouvant exister entre le moment ou un pointage a été sélectionné et le moment où il est effectivement émis.

Selon ce mode de mise en oeuvre préféré, la taille de la seconde fenêtre angulaire 123 est quant à elle déterminée comme étant proportionnelle à la valeur d'extension azimutale $DAz_{AdaptationCharge}$ qui correspondant à un multiple de l'extension azimutale du domaine de visibilité partiel dans la limite de celle du domaine de visibilité complet. Cette fenêtre peut être par exemple égale à 0.5 fois la valeur d'extension azimutale $DAz_{AdaptationCharge}$. La limite théorique au delà de laquelle une surcharge locale centrée sur ce secteur ne peut plus être traitée, est quant à elle égale à deux fois le domaine de visibilité partiel.

En pratique, pour créer dynamiquement un pointage de veille dans une direction donnée, incluse dans la première fenêtre 121, le procédé selon l'invention prends en compte les requêtes de pointage concernant des pointages autres que des pointages de veille dont la direction est incluse dans la seconde fenêtre 123 et le dernier pointage de veille créé à l'itération précédente. Par suite le pointage de veille considéré a pour direction la direction du pointage de veille précédent à laquelle on ajoute un écart azimutal $EcartAz_{Veille}$ défini et calculé comme suit.

La mise en oeuvre de cette logique d'adaptation du radar à la charge est faite en considérant que l'écart azimutal imposé par le procédé selon l'invention entre deux pointages de veille voisins, $EcartAz_{Veille}$, comprend une composante long terme, $EcartAz_{VeilleLT}$, et une composante court terme, $EcartAz_{VeilleCT}$.

$EcartAz_{VeilleLT}$ est très peu influencée par les écarts locaux de charge. Sa valeur correspond au secteur en azimut balayé par l'antenne pendant la durée moyenne d'un pointage, durée calculée sur une période de temps de plusieurs secondes, en tenant compte d'un pourcentage de pointages techniques fixé a priori.

$EcartAz_{VeilleCT}$ réagit uniquement aux variations de charge locales. Sa valeur est donnée par l'expression suivante:

$$EcartAz_{VeilleCT} = DAz_{Charge} \cdot EcartAz_{VeilleLT} / (DAz_{AdaptationCharge} - DAz_{Charge}) \quad [3]$$

Dans laquelle $DAz_{Charge}$ correspond à l'écart de charge radar instantané constaté, ramené à une valeur azimutale positive en cas de surcharge et négative en cas de sous-charge.

On constate que $EcartAz_{VeiueCT}$ est positif en cas de surcharge (on écarte plus les pointages de veille pendant un certain temps de manière à libérer progressivement de la charge radar), négatif en cas de sous charge (on resserre les pointages de veille pendant un certain temps de manière à profiter progressivement du surplus de charge radar disponible) et nul lorsque la charge est normale. En cas de surcharge locale importante et brusque, l'écartement maximum entre pointages par le procédé sera limité.

De manière à ce que l'écart en azimut reste pratiquement constant dans la zone traitée, le calcul de $EcartAz_{VeineCT}$ n'est effectué qu'en cas de détection d'une nouvelle cause de surcharge ou de sous charge (comme par exemple la prise en compte d'un pointage de poursuite ou une variation de la vitesse de rotation d'antenne) ou lorsque l'état de charge est redevenu normal. Dans ce dernier cas, l'écart en azimut est considéré comme étant donné par la composante $EcartAz_{VeilleLT}$.

Le calcul de l'écart azimutal ainsi calculé permet de faire en sorte qu'un état de surcharge ou de sous charge radar soit traité au mieux dans un secteur azimutal de largeur égale à $DAz_{AdaptationCharge}$. Dans ce secteur les écarts en azimut entre pointages de veille seront quasiment constants et l'entrée et la sortie de ce secteur se feront sans variation trop brusque de ces écarts, garanti en cela par la largeur suffisante du secteur en question.

On détermine ainsi pour chaque pointage de veille à venir, mémorisé dans la table des pointages candidats, la direction pointée correspondante.

La septième étape 57 est finalement suivie par une ultime étape 58 consistant à traiter les pointages candidats qui n'ont pas été retenus lors des dernières itérations et qui ne sont plus des candidats possibles pour l'itération suivante du fait que la direction de l'antenne à quittée leurs domaines de visibilité gérés respectifs, deux cas sont à prendre en compte:

- si le pointage candidat est de veille il est purement et simplement supprimé de la table des pointages candidats,
- si le pointage candidat n'est pas un pointage de veille mais qu'il est cependant périodique (pointage de poursuite par exemple) il est conservé dans la table des pointages candidats mais l'état désactivé (il n'est pas pris en compte dans les étapes de sélection) et il sera de nouveau activé et ses paramètres seront alors réactualisés (comme par exemple sa position et son domaine de visibilité géré) au tour d'antenne suivant ou à sa période suivante lors de son nouveau passage dans la fenêtre angulaire 123.

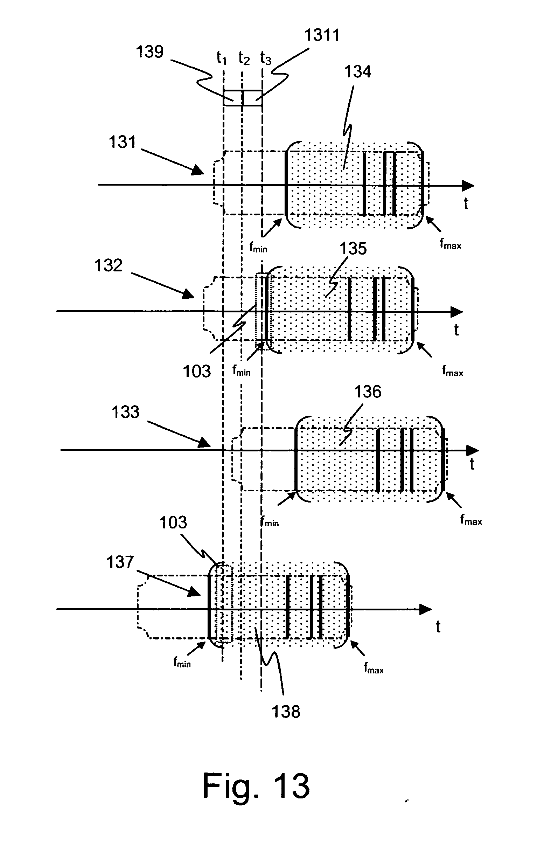

Il est à noter que si, à l'issue d'une itération des différentes étapes du procédé selon l'invention, aucun pointage n'est sélectionné (détection de "temps morts"), un pointage technique est mis en oeuvre (cf. figure 13). Une nouvelle itération est ensuite engagée.

De la même façon, si les pointages candidats sont en nombre insuffisant lors de la première étape d'une itération donnée, un pointage technique est sélectionné. Le traitement d'un nombre insuffisant de pointages candidats ne permettrait en effet pas une gestion efficiente des fréquences, c'est à dire un maintien de l'équiprobabilité des fréquences. Une nouvelle itération est ensuite engagée.

Le principe de gestion des "temps morts" par l'insertion de pointages techniques est illustré à la figure 13.

Si à un instant donné $t_1$, on ne dispose d'aucun pointage candidat actif, soit que, compte tenu de l'azimut de l'antenne, les domaines de visibilité, 134, 135 ou 136, des pointages candidats disponibles 131, 132 ou 133, n'est pas accessible par le faisceau d'antenne à l'instant $t_1$, soit que la partie du domaine de visibilité 138 d'un ou plusieurs pointages candidats disponibles 137 correspondant aux fréquences associées à ces pointages n'est pas accessible par le faisceau d'antenne à l'instant t (cf. la figure 10 qui montre des exemples de pointages accessibles par l'antenne du fait de la tolérance matérialisée par la fenêtre 103), un pointage technique 139 d'une durée donnée, est inséré. On détermine ensuite l'instant $t_2$ de fin d'exécution du pointage technique et on regarde si à cet instant, compte tenu de la rotation de l'antenne, certains des pointages candidats précédents, 131, 132, 133 ou 137, sont devenus actifs.

Dans l'affirmative les pointages candidats actifs sont pris en considération.

Dans la négative, aucun pointage candidat n'étant encore accessible, un autre pointage technique 1311 est inséré.

L'opération est répétée jusqu'à ce que pour un instant donné $t_3$, compte tenu de l'azimut de l'antenne à cet instant, un premier pointage candidat 132 devienne compte tenu de la direction de l'antenne potentiellement accessible.

Il est à noter que, selon l'invention, le taux de pointages techniques est régulé via la fonction 57 (l'écart entre pointages tient compte d'un pourcentage de temps pour les pointages techniques défini a priori et fixé par l'opérateur).

En utilisant le caractère dispersif de l'antenne utilisée par le radar dans lequel il est mis en oeuvre le procédé selon l'invention permet avantageusement, en ce qui concerne les pointages à exécuter durant la période de rotation de l'antenne, de substituer à la notion d'instant d'exécution la notion d'intervalle de temps d'exécution. Il permet ainsi de gérer de manière optimale la charge radar en déterminant l'ordre d'exécution des pointages à exécuter dans un intervalle de temps donné (qu'il a lui-même créé), et permet d'insérer des pointages adressés (comme les pointages de poursuite) permettant de transformer ce radar en un radar multifonction.

Il permet de gérer harmonieusement les variations de la charge radar (provoquées par l'insertion de pointages de poursuites et par la fluctuation de la vitesse de rotation d'antenne) grâce à une adaptation de l'écartement des pointages de veille à ces variations de charge.

Il permet également de gérer efficacement les fréquences, en jouant de façon aléatoire et homogène les fréquences autorisées ou les moins brouillées. Vis à vis du brouillage, le procédé permet de s'adapter à la carte brouillage entretenue tour à tour et à l'écoute instantanée des fréquences les moins brouillées, pour sélectionner au mieux les fréquences à utiliser.

La possibilité de fonctionnement de type multifonction est disponible grâce à la capacité d'insérer de façon dynamique des pointages adressés de type "poursuite active", "Reconnaissance Non-Coopérative de Cible (RNCC)", "désignation externe", ...; mais également de fonctions évoluées d'antibrouillage "Pick-A-Boo" (écartement des pointages autour d'une direction brouillée, pour limiter les effets du brouillage). Pour une capacité de pointage RNCC avec des formes d'ondes large bande (modulation de fréquence en rampe), et éviter le dépointage du faisceau par rapport à la position de la cible, le pointage sera ordonnancé grâce au procédé de l'invention en plusieurs sous pointages de rampes en fréquence réduites (principe de formes d'onde multi-rampes).

**Revendications**

1. Procédé pour gérer l'émission des pointages par un radar comportant une antenne dispersive tournante dont la vitesse de rotation est susceptible de varier au cours du temps, la gestion étant effectuée en fonction du domaine de visibilité de l'antenne à l'instant considéré, le procédé étant appliqué de manière itérative à des pointages candidats, chaque pointage candidat étant associé dans une table à un ensemble de fréquences candidates déterminées parmi l'ensemble des fréquences radar autorisées, le procédé consistant sélectionner, à chaque itération, celui des pointages candidats devant être exécuté en premier ainsi que la fréquence associée à ce pointage pour son exécution, **caractérisé en ce qu'**il comporte les étapes suivantes:

- une étape (51) durant laquelle on élimine pour l'itération considérée les pointages candidats dont la direction n'est pas accessible par le lobe d'antenne compte tenu des fréquences qui leurs sont associées dans la table et de la direction dans laquelle l'antenne est dirigée;
- une étape (53) durant laquelle on élimine pour chacun des pointages restants celles des fréquences candidates associées pour qui ne sont pas situées dans un voisinage donné de la fréquence théorique permettant d'exécuter le pointage considéré dans la direction voulue, compte tenu de la direction dans laquelle l'antenne est dirigée;
- une étape (55) durant laquelle on détermine si certaines des fréquences restantes sont brouillées et dans le cas où toutes les fréquences restantes sont brouillées, on détermine laquelle des fréquences est la moins brouillée; les fréquences brouillées étant éliminées à l'exception de la fréquence la moins brouillée;
- une étape (56) durant laquelle on sélectionne, parmi les fréquences candidates restantes, la fréquence la moins utilisée; les pointages candidat restants qui ne sont pas associés à cette fréquence étant éliminés;
le pointage candidat non éliminé auquel est associée la fréquence candidate la moins utilisée étant transmis aux moyens chargés de mettre en oeuvre les forme d'ondes correspondantes.
- une étape (57) de création de nouvelles requêtes de pointages; chaque nouvelle requête de pointage étant constituée par un pointage candidat nouveau ou un pointage candidat non encore exécuté et un ensemble de fréquences candidates associées, ces fréquences étant celles des fréquences autorisées qui sont contenues dans une bande de fréquence déterminée de manière aléatoire dans la bande de fréquences B allouée au radar.
- une étape finale (58) pour traiter le cas des pointages qui ne sont plus visibles à l'issue de l'itération courante compte tenu du déplacement du domaine de visibilité consécutif à la rotation de l'antenne;

Les étapes du procédé formant étant répétées de manière itérative, la table qui associe les pointages candidats et les fréquences candidates étant renouvelée à chaque cycle.

**2.** Procédé selon la revendication 1, **caractérisé en ce qu'**il comporte en outre une étape intermédiaire (52) qui consiste, à éliminer les pointages candidats qui, s'ils étaient finalement sélectionnés lors de l'itération considérée, pourraient induire la perte d'un ou de plusieurs autres pointages candidats dont la durée de visibilité est faible.

**3.** Procédé selon la revendication 2 **caractérisé en ce qu'**il comporte en outre une deuxième étape intermédiaire (54) pour effectuer la sélections des pointages déclarés comme étant les plus prioritaires.

**4.** Procédé selon l'une quelconque des revendications précédentes, **caractérisé en ce que** l'étape (57) de création de nouvelles requêtes de pointages procède pour chaque pointage candidat à l'association d'une plage de fréquences comprises dans un intervalle borné par deux fréquences $f_{min}$ et $f_{max}$, la fréquence $f_{max}$ étant la fréquence la plus élevée du domaine de fréquences autorisées, la fréquence $f_{min}$ étant une fréquence choisie de manière aléatoire dans un domaine de fréquence s'étendant de la fréquence la plus basse du domaine de fréquences autorisées à une fréquence $f_{limite\_tirage}$ supérieure à $F_{min}$ et inférieure à $f_{max}$.

**5.** Procédé selon la revendication 4, **caractérisé en ce que** la fréquence $f_{min}$ est obtenue par un tirage aléatoire avec une densité de probabilité décroissante lorsque la fréquence augmente.

**6.** Procédé selon l'une des revendications 4 ou 5, **caractérisé en ce que** la fréquence $f_{limite\_tirage}$ est déterminée de façon à définir avec $f_{max}$ un intervalle de fréquences contenant un nombre n de fréquences autorisées faible devant le nombre de fréquences autorisées contenues dans l'intervalle limité par $F_{min}$ et $f_{max}$.

**7.** Procédé selon l'une quelconque des revendications précédentes, **caractérisé en ce que** pour la détermination des nouveaux pointages candidats, l'étape (57) de création de nouvelles requêtes de pointages prend en compte une première fenêtre angulaire (121) contiguë au domaine de visibilité (122) pour la détermination des nouveaux pointages de veille et une seconde fenêtre angulaire (123) contiguë à la première fenêtre (121) pour la détermination des autres nouveaux pointages les fenêtres angulaires 121 et 123 étant déterminées de façon à prendre en compte la rotation de l'antenne.

**8.** Procédé selon la revendication 7, **caractérisé en ce que** la première fenêtre angulaire (121) est déterminée de façon à correspondre à l'angle de rotation de l'antenne sur une durée équivalente à la durée maximale d'un demi-pointage, à laquelle on ajoute le retard maximum pouvant exister entre le moment ou un pointage a été sélectionné et le moment où il est effectivement émis; la taille de la seconde fenêtre angulaire (123) étant quant à elle définie comme étant proportionnelle à la valeur d'extension azimutale $DAz_{AdaptationCharge}$ qui correspond à un multiple de l'extension azimutale correspondant au domaine de visibilité partiel, $DAz_{AdaptationCharge}$ étant dans tous les cas inférieure au domaine de visibilité complet.

**9.** Procédé selon l'une quelconque des revendications précédentes, **caractérisé en ce que** l'étape (55) prend en compte les informations relatives aux fréquences les moins brouillées pour la sélection des pointages de deux façons possibles, soit localement par écoute instantanée des fréquences brouillées soit globalement par l'utilisation des cartes de fréquences brouillées disponibles.

**Claims**

**1.** A method for managing transmitted beam directions by a radar comprising a rotating dispersive antenna, the rotation speed of which is likely to vary over time, said management being carried out as a function of the field of visibility of the antenna at the considered instant, said method being applied in an iterative manner to candidate beam transmission directions, each candidate beam transmission direction being associated in a table to a set of candidate frequencies that are determined from the set of authorised radar frequencies, said method consisting in selecting, at each iteration, which of the candidate beam transmission directions has to be executed first, as well as the frequency that is associated with this beam transmission direction for its execution, **characterised in that** it comprises the following steps:

- a step (51) which involves eliminating for the considered iteration the candidate beam transmissions which are not accessible to the antenna lobe, taking into account the frequencies associated therewith in the table and the beam transmission direction in which the antenna is pointed;
- a step (53) which involves eliminating for each of the remaining beam transmission directions the associated candidate frequencies that are not located in a given neighbourhood of the theoretical frequency allowing the considered beam transmission to be executed in the required beam transmission direction, taking into account the beam transmission direction in which the antenna is pointed;
- a step (55) which involves determining whether some of the remaining frequencies are jammed and in the case that all of the remaining frequencies are jammed the least jammed frequency is determined, the jammed frequencies being eliminated with the exception of the least jammed frequency;
- a step (56) which involves selecting the least used frequency from the remaining candidate frequencies, with the remaining candidate beam transmission directions that are not associated with this frequency being eliminated;
wherein the non-eliminated candidate beam transmission direction to which the least used candidate frequency is associated is transmitted to means that are designed to implement the corresponding waveforms;
- a step (57) of creating new beam transmission direction requests, each new beam transmission direction request being constituted by a new candidate beam transmission direction or a candidate beam transmission direction that is not yet executed and a set of associated candidate frequencies, said frequencies being those of the authorised frequencies that are contained in a frequency band that is determined in a random manner from the frequency band B assigned to the radar;
- a final step (58) of processing the case of beam transmission directions that are no longer visible on completion of the current iteration, taking into account the displacement of the field of visibility following the rotation of the antenna;

the steps of the forming method being repeated in an iterative manner, with the table that associates the candidate beam transmission directions and the candidate frequencies being renewed at each cycle.

**2.** The method according to claim 1, **characterised in that** it further comprises an intermediate step (52) that consists in eliminating the candidate beam transmission directions that, if they were ultimately selected during the considered iteration, could induce the loss of one or more other candidate beam transmission directions with a short duration of visibility.

**3.** The method according to claim 2, **characterised in that** it further comprises a second intermediate step (54) for carrying out the selections of the beam transmission directions that are declared as having the highest priority.

4. The method according to any one of the preceding claims, **characterised in that** the step (57) of creating new beam transmission direction requests undertakes for each candidate beam transmission direction the association of a frequency range that is within an interval that is limited by two frequencies $f_{min}$ and $f_{max}$, the frequency $f_{max}$ being the highest frequency of the authorised frequency field, the frequency $f_{min}$ being a frequency that is selected randomly in a frequency field that extends from the lowest frequency of the authorised frequency field to a frequency $f_{limite\_tirage}$ that is greater than $f_{min}$ and lower than $f_{max}$.

5. The method according to claim 4, **characterised in that** the frequency $f_{min}$ is obtained by a random draw with a likelihood density that decreases as the frequency increases.

6. The method according to claim 4 or 5, **characterised in that** the frequency $f_{limite\_tirage}$ is determined so as to define with $f_{max}$ a frequency interval that contains a number n of authorised frequencies that is low in relation to the number of authorised frequencies contained in the interval that is limited by $f_{min}$ and $f_{max}$.

7. The method according to any one of the preceding claims, **characterised in that**, for determining new candidate beam transmission directions, step (57) for creating new beam transmission direction requests takes into account a first angular window (121) that is contiguous with the field of visibility (122) for determining new monitoring beam transmission directions and a second angular window (123) that is contiguous with the first window (121) for determining other new beam transmission directions, the angular windows (121) and (123) being determined so as to take into account the rotation of the antenna.

8. The method according to claim 7, **characterised in that** the first angular window (121) is determined so as to correspond to the angle of rotation of the antenna over a duration that is equivalent to the maximum duration of a half-beam transmission direction, to which is added the maximum delay that can exist between the moment at which a beam transmission direction has been selected and the moment at which a beam is effectively transmitted, the size of the second angular window (123) being, for its part, defined as being proportional to the value of azimuth extension $DAz_{AdaptationCharge}$ that corresponds to a multiple of the azimuth extension that corresponds to the partial field of visibility, $DAz_{AdaptationCharge}$ being in all cases lower than the complete field of visibility.

9. The method according to any one of the preceding claims, **characterised in that** the step (55) takes into account the information that relates to the least jammed frequencies for selecting beam transmission directions in two possible manners, either locally by instantaneously listening to the jammed frequencies or globally by using the available jammed frequency maps.

**Patentansprüche**

1. Verfahren zum Verwalten der Abstrahlrichtungen eines Radars, das eine rotierende streuende Antenne umfasst, deren Rotationsgeschwindigkeit dazu neigt, im Laufe der Zeit zu variieren, wobei die Verwaltung vom Sichtbarkeitsbereich der Antenne zum betrachteten Zeitpunkt abhängig ist, wobei das Verfahren auf iterative Weise auf Kandidatenabstrahlrichtungen angewendet wird, wobei jede Kandidatenabstrahlrichtung in einer Tabelle mit einem Satz von Kandidatenfrequenzen assoziiert ist, die aus dem Satz von autorisierten Radarfrequenzen ermittelt werden, wobei das Verfahren das Auswählen, bei jeder Iteration, der Kandidatenrichtung, in der zuerst abgestrahlt werden soll, sowie der Frequenz beinhaltet, die mit einer Abstrahlung in dieser Richtung assoziiert ist, **dadurch gekennzeichnet, dass** es die folgenden Schritte beinhaltet:

  - einen Schritt (51), der das Eliminieren, für die betrachtete Iteration, der Kandidatenabstrahlrichtungen beinhaltet, die für die Antennenkeule nicht zugängig sind, unter Berücksichtigung der in der Tabelle damit assoziierten Frequenzen und der Abstrahlrichtung, in die die Antenne zeigt;
  - einen Schritt (53), der das Eliminieren, für jede der übrigen Abstrahlrichtungen, der assoziierten Kandidatenfrequenzen beinhaltet, die sich nicht in einer gegebenen Nachbarschaft der theoretischen Frequenz befinden, die die erwägte Abstrahlung in der gewünschten Richtung erlaubt, angesichts der Richtung, in die die Antenne zeigt;
  - einen Schritt (55), der die Ermittlung beinhaltet, ob bestimmte der restlichen Frequenzen gestört sind, und falls alle übrigen Frequenzen gestört sind, die am wenigsten gestörte Frequenz ermittelt wird, wobei die gestörten Frequenzen mit Ausnahme der am wenigsten gestörten Frequenz eliminiert werden;
  - einen Schritt (56), der das Auswählen der am wenigsten benutzten Frequenz aus den restlichen Kandidatenfrequenzen beinhaltet; wobei die restlichen Kandidatenabstrahlrichtungen, die nicht mit dieser Frequenz asso-

ziert sind, eliminiert werden;

wobei die nicht eliminierte Kandidatenabstrahlrichtung, mit der die am wenigsten benutzte Kandidatenfrequenz assoziiert ist, zu Mitteln übertragen wird, die zum Implementieren der entsprechenden Wellenformen ausgelegt sind;

- einen Schritt (57) des Erzeugens von neuen Abstrahlrichtungsanforderungen; wobei jede neue Abstrahlrichtungsanforderung von einem neuen Abstrahlrichtungskandidaten oder einem noch nicht benutzten Abstrahlrichtungskandidaten und einem Satz von assoziierten Kandidatenfrequenzen gebildet wird, wobei diese Frequenzen diejenigen der autorisierten Frequenzen sind, die in einem Frequenzband enthalten sind, das stichprobenartig von dem dem Radar zugeordneten Frequenzband B ermittelt werden;

- einen letzten Schritt (58) des Verarbeitens des Falls von Abstrahlrichtungen, die nach Abschluss der aktuellen Iteration nicht mehr sichtbar sind, angesichts der Verschiebung des Sichtbarkeitsbereichs nach der Rotation der Antenne;

wobei die Schritte des Formverfahrens auf iterative Weise wiederholt werden, wobei die Tabelle, die die Kandidatenabstrahlrichtungen und die Kandidatenfrequenzen assoziiert, in jedem Zyklus erneuert wird.

2. Verfahren nach Anspruch 1, **dadurch gekennzeichnet, dass** es ferner einen Zwischenschritt (52) beinhaltet, der darin besteht, die Kandidatenabstrahlrichtungen zu eliminieren, die, wenn sie schließlich während der betrachteten Iteration ausgewählt werden, den Verlust von einer oder mehreren anderen Kandidatenabstrahlrichtungen mit einer kurzen Sichtbarkeitsdauer induzieren könnten.

3. Verfahren nach Anspruch 2, **dadurch gekennzeichnet, dass** es ferner einen zweiten Zwischenschritt (54) zum Ausführen der Auswahlen der Abstrahlrichtungen beinhaltet, die als mit der höchsten Priorität deklariert werden.

4. Verfahren nach einem der vorherigen Ansprüche, **dadurch gekennzeichnet, dass** der Schritt (57) des Erzeugens neuer Abstrahlrichtungsanforderungen für jeden Abstrahlrichtungskandidaten die Assoziation eines Frequenzbereichs durchführt, der in einem Intervall liegt, das durch zwei Frequenzen $f_{min}$ und $f_{max}$ begrenzt ist, wobei die Frequenz $f_{max}$ die höchste Frequenz des autorisierten Frequenzbereichs ist, wobei die Frequenz $f_{min}$ eine Frequenz ist, die strichprobenartig aus einem Frequenzbereich ausgewählt wird, das sich von der tiefsten Frequenz des autorisierten Frequenzbereichs zu einer Frequenz $f_{limite\_tirage}$ erstreckt, die höher als $f_{min}$ und tiefer als $f_{max}$ ist.

5. Verfahren nach Anspruch 4, **dadurch gekennzeichnet, dass** die Frequenz $f_{min}$ stichprobenartig mit einer Wahrscheinlichkeitsdichte erhalten wird, die mit zunehmender Frequenz abnimmt.

6. Verfahren nach Anspruch 4 oder 5, **dadurch gekennzeichnet, dass** die Frequenz $f_{limite\_tirage}$ so ermittelt wird, dass mit $f_{max}$ ein Frequenzintervall definiert wird, das eine Anzahl n von autorisierten Frequenzen enthält, die in Bezug auf die Anzahl von autorisierten Frequenzen niedrig sind, die im Intervall enthalten sind, das durch $f_{min}$ und $f_{max}$ begrenzt wird.

7. Verfahren nach einem der vorherigen Ansprüche, **dadurch gekennzeichnet, dass** zum Ermitteln von neuen Abstrahlrichtungskandidaten Schritt (57) des Erzeugens von neuen Abstrahlrichtungsanforderungen ein erstes Winkelfenster (121), das an den Sichtbarkeitsbereich (122) angrenzt, um neue Überwachungsabstrahlrichtungen zu ermitteln, und ein zweites Winkelfenster (123) berücksichtigt, das an das erste Fenster (121) angrenzt, um andere neue Abstrahlrichtungen zu ermitteln, wobei die Winkelfenster (121) und (123) so ermittelt werden, dass sie die Rotation der Antenne berücksichtigen.

8. Verfahren nach Anspruch 7, **dadurch gekennzeichnet, dass** das erste Winkelfenster (121) so ermittelt wird, dass es dem Rotationswinkel der Antenne für eine Dauer entspricht, die mit der maximalen Dauer einer Halbabstrahlrichtung äquivalent ist, zu der die maximale Verzögerung addiert wird, die zwischen dem Moment, an dem eine Abstrahlrichtung gewählt wurde, und dem Moment existieren kann, an dem effektiv in dieser Richtung abgestrahlt wird, wobei die Größe des zweiten Winkelfensters (123) ihrerseits als proportional zum Wert der Azimutverlängerung $DAz_{AdaptationCharge}$ ist, die einem Vielfachen der Azimuterweiterung entspricht, die dem Teilsichtbarkeitsbereich entspricht, wobei $DAz_{AdaptationCharge}$ in allen Fällen niedriger ist als der komplette Sichtbarkeitsbereich.

9. Verfahren nach einem der vorherigen Ansprüche, **dadurch gekennzeichnet, dass** der Schritt (55) die Informationen in Bezug auf die am wenigsten gestörten Frequenzen zum Wählen von Abstrahlrichtungen auf zwei mögliche Weisen berücksichtigt, entweder örtlich durch momentanes Horchen auf gestörte Frequenzen oder global anhand der verfügbaren Karten von gestörten Frequenzen.

Fig. 1

Fig. 2

Fig. 3

Fig. 4

50 — Table des requêtes de pointages

51 — Sélection des pointages visibles

52 — Prise en compte des pointages candidats critiques

53 — Sélection par les fréquences autorisées

54 — Sélection par les priorités affectées aux pointages candidats

55 — Sélection par les fréquences éligibles les moins brouillées

56 — Sélection par les fréquences éligibles les moins utilisées

57 — Création de nouvelles requêtes de pointages

58 — Traitement des pointages devenus non visibles

Fig. 5

Zone de tirage aléatoire

61

Fréquences

$F_{min}$      $f_{min}$      $f_s$   $F_{max},\ f_{max}$

6-a : Bande continue B de M fréquences autorisées

Zone de tirage aléatoire

62

Fréquences

$F_{min}$      $f_{min}$  $f_s$  $f_{max}$      $F_{max}$

6-b : Sous-Bande de la bande B de N fréquences successives autorisées

Zone de tirage aléatoire

63      63

Fréquences

$F_{min}$      $f_{min}$      $f_s$      $f_{max}$  $F_{max}$

6-c : Peigne de P fréquences autorisées dispersées

# Fig. 6

Probabilité

Zone de tirage aléatoire

F$_{limite\_tirage}$

Fréquences

F$_{min}$

f$_{min}$

F$_{limite\_tirage}$

f$_s$

F$_{max,}$ f$_{max}$

# Fig. 7

31

122

121

123

ω(t)

# Fig. 12

Pointage 1

Pointage 2

Pointage n-1

Pointage n

81

82

$\theta_i$

Azimut antenne

# Fig. 8   Première étape

92

81

93

82

Pointage 1

Pointage 2

91

Pointage n-1

Pointage n

$\theta_i$

Azimut antenne

# Fig. 9   Deuxième étape

Fig. 10

11-a : cas1 = deux fréquences candidates avec des taux différents

11-b : cas1 = deux fréquences candidates avec des taux identiques

Fig.11

Fig. 13

Fig. 14

**EP 2 199 824 B1**

## RÉFÉRENCES CITÉES DANS LA DESCRIPTION

**Documents brevets cités dans la description**

*   EP 0645839 A